(19) Europäisches Patentamt / European Patent Office / Office européen des brevets

(11) **EP 2 619 944 B1**

(12) **EUROPÄISCHE PATENTSCHRIFT**

(45) Veröffentlichungstag und Bekanntmachung des Hinweises auf die Patenterteilung:
**12.11.2014 Patentblatt 2014/46**

(21) Anmeldenummer: **11763875.9**

(22) Anmeldetag: **07.09.2011**

(51) Int Cl.:
*H04L 12/26* (2006.01)     *H04W 24/06* (2009.01)
*H04W 24/08* (2009.01)     *H04B 17/00* (2006.01)

(86) Internationale Anmeldenummer:
**PCT/EP2011/065473**

(87) Internationale Veröffentlichungsnummer:
**WO 2012/038257 (29.03.2012 Gazette 2012/13)**

(54) **MESSEINHEIT UND VERFAHREN ZUR ÜBERTRAGUNGSPARAMETERMESSUNG EINES MESSOBJEKTS**

MEASURING UNIT AND METHOD FOR MEASURING TRANSMISSION PARAMETERS FOR A TEST OBJECT

UNITÉ DE MESURE ET PROCÉDÉ DE MESURE DES PARAMÈTRES DE TRANSMISSION D'UN OBJET À MESURER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2010 DE 102010046095**

(43) Veröffentlichungstag der Anmeldung:
**31.07.2013 Patentblatt 2013/31**

(73) Patentinhaber: **Rohde & Schwarz GmbH & Co. KG 81671 München (DE)**

(72) Erfinder:
• **MELLEIN, Heinz**
  **85540 Haar (DE)**
• **SCHÄFER, Christian**
  **83022 Rosenheim (DE)**

(74) Vertreter: **Körfer, Thomas et al Mitscherlich PartmbB Patent- und Rechtsanwälte Sonnenstrasse 33 80331 München (DE)**

(56) Entgegenhaltungen:
**EP-A1- 1 890 507     GB-A- 2 352 129**

• **"A GSM DIGITAL RADIO COMMUNICATIONS TEST SET", MICROWAVE JOURNAL, HORIZON HOUSE PUBLICATIONS, NORWOOD, MA, US, Bd. 40, Nr. 5, 1. Mai 1997 (1997-05-01), XP000737311, ISSN: 0192-6225**

EP 2 619 944 B1

**Beschreibung**

Die Erfindung betrifft eine Messeinheit und ein Verfahren zur Übertragungsparametermessung eines Messobjekts. Die Übertragungsparametermessung umfasst bevorzugt eine Durchsatzmessung, eine Latenzmessung und eine Round-Trip-Delay-Messung (dt. Umlaufzeitverzögerung), eine Jittermessung und eine Packetfehlerratemessung, wobei das Messobjekt über einen simulierten Funkübertragungskanal mit der Messeinheit verbunden ist.

Tragbare elektronische Geräte wie z.B. Mobiltelefone, Organizer und Laptops, aber auch Geräte für den stationären Betrieb, wie z.B. WLAN-Router (engl. wireless local area network; dt. drahtloses lokales Netzwerk) decken eine immer höhere Anzahl an Kommunikationsstandards ab. So unterstützen neue Mobiltelefone neben dem GSM-Standard (engl. global system for mobile communications; dt. System zur weltweiten drahtlosen Kommunikation) und UMTS-Standard (engl. universal mobile telecommunications system; dt. universelle drahtloses Kommunikationssystem) auch neue Kommunikationsstandards für schnelle Datenübertragungen wie z.B. WiMAX (engl. worldwide interoperability for microwave access; dt. weltweite Kompatibilität für Mikrowellenzugriffe) oder LTE (engl. Long Term Evolution; dt. Langzeitentwicklung). WLAN-Router unterstützen ihrerseits ebenfalls verschiedene Kommunikationsstandards wie z.B. IEEE 802.11a (engl. institute of electrical and electronics engineers; dt. als Standardisierungs-Gremium fungierender Ingenieursverband) oder IEEE 802.11n. Um sicherzustellen, dass die elektronischen Geräte fehlerfrei funktionieren, werden verschiedene Übertragungsparametermessungen vorgenommen. Ein wichtiges Indiz ist hierfür bisher die Bitfehlerrate. Allerdings ist für den Endbenutzer letztendlich nicht die Bitfehlerrate von Interesse, sondern der zu erzielende Datendurchsatz. Eine Berechnung des maximal zu erzielenden Datendurchsatzes anhand der Bitfehlerrate ist allerdings nicht möglich. GB2352129 [NOKIA MOBILE PHONES LTD [FI]) betrifft eine Vorrichtung und ein Verfahren zum Erzeugen eines Testsignals zur Verwendung bei der Bestimmung der Leistungsfähigkeit eines Empfängers.

Aus der JP 2007-116329 A ist ein System zur Datendurchsatzmessung für eine WLAN-Basisstation bekannt. Eine Messeinheit generiert Datenpakete und versendet diese an die zu überprüfende WLAN-Basisstation. Die Messeinheit zählt dabei die Bestätigungspakete für die empfangenen Datenpakete. Anhand der Anzahl der gesendeten Datenpakete, der Anzahl der empfangenen Bestätigungspakete und der Größe der einzelnen Datenpakete berechnet die Messeinheit den Datendurchsatz. Nachteilig an der JP 2007-116329 A ist, dass zur Berechnung des Datendurchsatzes zwingend die Bestätigungspakete empfangen werden müssen, so dass die Qualität des jeweiligen Rückkanals zwangsweise die Durchsatzmessung des Abwärtspfads (engl. downlink) oder des Aufwärtspfads (engl. uplink) beeinflusst.

Es ist daher die Aufgabe der Erfindung eine Messeinheit und ein entsprechendes Messverfahren zu schaffen, um die Übertragungsparameter für ein Messobjekt möglichst genau zu messen.

Die Aufgabe wird bezüglich der Messeinheit durch die Merkmale des Anspruchs 1 und bezüglich des Verfahrens durch die Merkmale des Anspruchs 9 gelöst. In den Unteransprüchen sind vorteilhafte Weiterbildungen der erfindungsgemäßen Messeinheit und des erfindungsgemäßen Verfahrens angegeben.

Die erfindungsgemäße Messeinheit zur Übertragungsparametermessung eines Messobjekts weist eine Steuereinheit, eine Sende- und Empfangseinheit und eine Auswerteeinheit auf. Die Sende- und Empfangseinheit ist über eine erste Verbindung mit der Steuereinheit und über zumindest einen Übertragungskanal mit dem Messobjekt verbunden. Das Messobjekt ist über eine zweite Verbindung mit der Auswerteeinheit verbunden, wobei zur Übertragungsparametermessung des Messobjekts zwischen der Steuereinheit und der Auswerteeinheit Steuerdatenpakete und Testdatenpakete getrennt übertragen werden. Ein Übertragungskanal für die Testdatenpakete ist dabei gezielt störbar.

Besonders vorteilhaft ist es, dass die Testdatenpakete und die Steuerdatenpakete getrennt voneinander übertragen werden und dass nur der Übertragungskanal für die Testdatenpakete dabei gezielt störbar ist. Dadurch wird erreicht, dass z.B. bei einer Durchsatzmessung sich der Durchsatz einzig aus der Anzahl der übertragenen Testdatenpakete ergibt, weil zusätzliche Steuerdatenpakete, die z.B. für die Bestätigung der einzelnen Testdatenpakete notwendig sind, oder allgemeine Konfigurationsparameter enthalten, ungestört übertragen werden. Damit sind hochgenaue Aussagen über die Leistungsfähigkeit der Sendeeinheit und der Empfangseinheit des Messobjekts machbar. Weiterhin können durch die gezielte Störung des Übertragungskanals für die Testdatenpakete Szenarien nachgebildet werden, denen das Messobjekt in seinem späteren Einsatzbereich ausgesetzt ist.

In einem ersten Verfahrensschritt des erfindungsgemäßen Verfahrens zur Übertragungsparametermessung eines Messobjekts werden Steuerdatenpakete zwischen der Steuereinheit und der Auswerteeinheit übertragen. In einem zweiten Verfahrensschritt wird der Übertragungskanal, der zum Übertragen von Testdatenpakete zwischen der Steuereinheit und der Auswerteeinheit verwendet wird, gestört. In einem dritten Verfahrensschritt werden Testdatenpakete zwischen der Steuereinheit und der Auswerteeinheit oder der Auswerteeinheit und der Steuereinheit übertragen.

Es ist besonders vorteilhaft, dass bei dem erfindungsgemäßen Verfahren in einem ersten Verfahrensschritt die Steuerdatenpakete übertragen werden. Beim Übertragen der Steuerdatenpakete, die z.B. die Anzahl der Testdatenpakete oder die Größe eines Testdatenpakets oder die Datenrate enthalten, ist der Übertragungskanal nicht gestört, so dass diese Informationen sicher die Auswerteeinheit erreichen. Erst in einem zweiten Verfahrensschritt wird der Übertragungskanal, über den die Testdatenpakete übertragen werden, gezielt gestört, so dass verschiedene Szenarien nachgebildet werden können, die im Betrieb entstehen können. Erst in einem dritten Verfahrensschritt werden dann die Testdatenpakete über den gestörten Übertragungskanal übertragen, um sehr genau und unabhängig von der Übertragung der Steuerdatenpakete, die Übertragungsparameter des Messobjekts zu messen.

Außerdem besteht ein Vorteil der erfindungsgemäßen Messeinheit, wenn die Steuerdatenpakete über einen nicht gestörten Übertragungskanal oder über zumindest eine weitere nicht gestörte Verbindung übertragbar sind. Dadurch kann die Zeitdauer, bis die Übertragungsparameter ermittelt sind, gesenkt werden, weil z.B. Bestätigungspakete bei einem verbindungsorientierten Protokoll über einen ungestörten Übertragungskanal oder über zumindest eine weitere Verbindung zwischen der Steuereinheit und der Auswerteeinheit übertragen werden können. Der Übertragungskanal für die Testdatenpakete muss in diesem Fall während der Messung nicht für die Übertragung von Steuerdatenpaketen angepasst werden.

Ferner besteht ein Vorteil der erfindungsgemäßen Messeinheit, wenn die Steuereinheit und die Auswerteeinheit in einem gemeinsamen Computersystem ausgebildet sind oder wenn die Steuereinheit und die Auswerteeinheit gemeinsam in dem Computersystem der Sende- und Empfangseinheit ausgebildet sind. Dadurch wird sowohl die Menge der benötigen Bauteile verringert, als auch die Messung von Latenzzeiten und/oder Round-Trip-Delays und/oder Jitter erleichtert, weil auf einen gemeinsamen Zeitgeber zurückgegriffen werden kann.

Zusätzlich besteht bei dem erfindungsgemäßen Verfahren ein Vorteil, wenn das Verfahren einen vierten Verfahrensschritt aufweist, in welchem ein Zeitgeber in der Steuereinheit oder der Auswerteeinheit gestartet wird, sobald Testdatenpakete gesendet oder empfangen werden und wenn in einem fünften Verfahrensschritt der Zeitgeber in der Steuereinheit oder der Auswerteeinheit gestoppt wird, sobald Testdatenpakete oder Bestätigungsdatenpakete empfangen werden. Innerhalb eines sechsten Verfahrensschritts wird die vergangene Zeit in einer Speichereinheit addiert und die Anzahl der empfangenen Testdatenpakete oder Bestätigungsdatenpakete inkrementiert. Für den Fall, dass die Steuereinheit einen Zeitgeber startet, wenn sie Testdatenpakete versendet, und den Zeitgeber stoppt, wenn sie Bestätigungsdatenpakete empfängt, kann sehr einfach eine Latenzmessung und/oder eine Round-Trip-Delay-Messung und/oder eine Jittermessung erfolgen. Andererseits kann die Auswerteeinheit sehr einfach den Datendurchsatz bestimmen, wenn sie nach Erhalt von Testdatenpakete den Zeitgeber startet und nach Erhalt weiterer Testdatenpakete den Zeitgeber stoppt und die vergangene Zeit bestimmt.

Schlussendlich besteht ein Vorteil, wenn das erfindungsgemäße Verfahren in einem weiteren Verfahrensschritt einen Befehl als Steuerdatenpaket von der Steuereinheit oder der Auswerteeinheit an die Auswerteeinheit oder an die Steuereinheit überträgt, dass alle Testdatenpakete gesendet sind. Ein solcher als Steuerdatenpaket versendeter Befehl würde ungestört seinen Empfänger erreichen und dafür sorgen, dass laufende Zeitgeber gestoppt werden und der Durchsatz berechnet werden kann. Die Durchsatzmessung ist dadurch, gerade bei einer geringen Anzahl an gesendeten Testdatenpaketen, viel genauer, als wenn dieser Befehl aufgrund des gestörten Übertragungskanals den Empfänger nie oder erst nach mehrmaligen Sendeversuchen erreichen würde.

Verschiedene Ausführungsformen der Erfindung werden nachfolgend unter Bezugnahme auf die Zeichnung beispielhaft beschrieben. Gleiche Gegenstände weisen dieselben Bezugszeichen auf. Die entsprechenden Figuren der Zeichnung zeigen im Einzelnen:

Fig. 1    ein Übersichtsschaltbild eines Ausführungsbeispiels der erfindungsgemäßen Messeinheit;

Fig. 2    ein Übersichtsschaltbild eines weiteren Ausführungsbeispiels der erfindungsgemäßen Messeinheit;

Fig. 3    ein Übersichtsschaltbild eines weiteren Ausführungsbeispiels der erfindungsgemäßen Messeinheit;

Fig. 4    ein Übersichtsschaltbild eines weiteren Ausführungsbeispiels der erfindungsgemäßen Messeinheit;

Fig. 5    ein möglicher Aufbau eines Pakets für die Testdaten;

Fig. 6A    ein beispielhaftes Ablaufprotokoll einer verbindungslosen Messung;

Fig. 6B    ein beispielhaftes Ablaufprotokoll zur Messung der Round-Trip-Delay;

Fig. 6C    ein beispielhaftes Ablaufprotokoll zur Messung des Datendurchsatzes;

Fig. 6D    ein beispielhaftes Ablaufprotokoll zur Messung der Latenz und des Jitters; und

Fig. 7    ein Flussdiagramm für ein Ausführungsbeispiel des erfindungsgemäßen Verfahrens zur Übertragungsparametermessung eines Messobjekts.

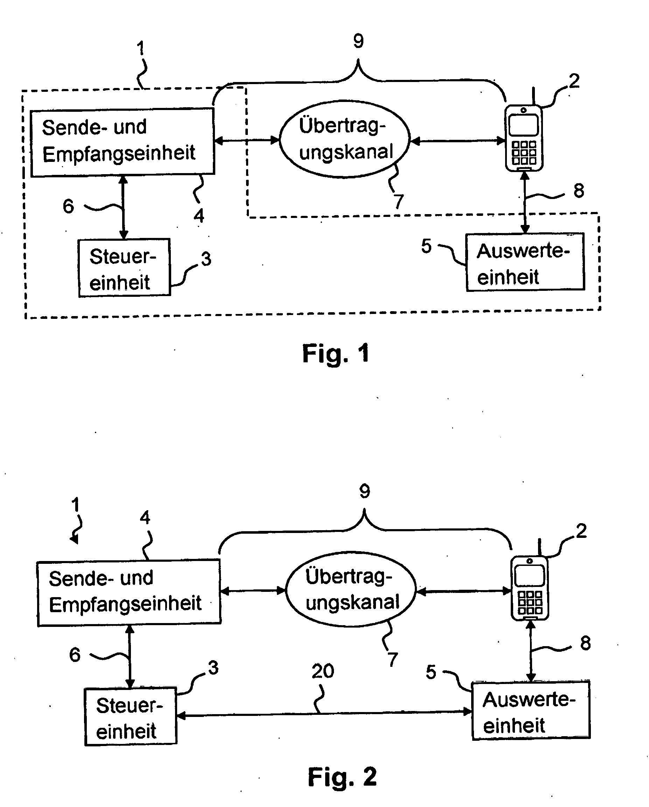

Fig. 1 zeigt ein Übersichtsschaltbild eines Ausführungsbeispiels der erfindungsgemäßen Messeinheit 1 zur Übertragungsparametermessung eines Messobjekts 2. Die Messeinheit 1 weist eine Steuereinheit 3, eine Sende- und Empfangseinheit 4 und eine Auswerteeinheit 5 auf. Die Sende- und Empfangseinheit 4 ist über eine erste Verbindung 6 mit der Steuereinheit 3 verbunden. Bei dieser ersten Verbindung 6 kann es sich z.B. um eine LAN-Verbindung handeln. Die Sende- und Empfangseinheit 4 ist weiterhin über einen Übertragungskanal 7 mit dem Messobjekt 2 verbunden. Das Messobjekt 2 ist wiederum über eine zweite Verbindung 8 mit der Auswerteeinheit 5 verbunden. Bei dieser zweiten Verbindung 8 kann es sich z.B. um eine LAN-Verbindung, eine USB-Verbindung (engl. universal serial bus; dt. universelle serieller Bus) oder um eine PCMCIA-Verbindung (engl. personal computer memory card international association; dt. Personalcomputerspeicherkarte, internationale Vereinigungskarte) handeln. Zwischen der Steuereinheit 3 und der Auswerteeinheit 5 werden über die erste Verbindung 6, die zweite Verbindung 8 und den Übertragungskanal 7 Testdatenpakete und Steuerdatenpakete getrennt übertragen.

Bei dem Übertragungskanal 7 handelt es sich bevorzugt um einen simulierten Funkübertragungskanal, z.B. nach dem LTE-Standard oder dem WiMAX-Standard oder dem WLAN-Standard oder dem UMTS-Standard. Der Übertragungskanal 7 wird dabei innerhalb der Sende- und Empfangseinheit 4 simuliert. Je nach Kommunikationsprotokoll bietet die Sende- und Empfangseinheit 4 zahlreiche Einstellmöglichkeiten der Signalparameter, wie z.B. für den OFDM-Rahmen (engl. orthogonal frequency division multiplex; dt. orthogonaler Frequenzmultiplex) oder für verschiedene Modulations- und Codierverfahren. Die Sende- und Empfangseinheit 4 besitzt einen digitalen Signalprozessor und/oder eine zentrale Verarbeitungseinheit auf denen der entsprechende Kommunikationsprotokoll-Stack, wie z.B. der WiMAX-Stack, implementiert ist.

Über die erste Verbindung 6, bei der es sich bevorzugt um eine LAN-Verbindung handelt, empfängt die Sende- und Empfangseinheit 4 Steuerdatenpakete und/oder Testdatenpakete, ordnet diesen im Anschluss daran bei Verwendung des WiMAX-Kommunikationsprotokolls OFDM-Symbole zu und moduliert diese auf die einzelnen Trägerfrequenzen auf. Eine integrierte Verstärkereinheit innerhalb der Sende- und Empfangseinheit 4 stellt das hochfrequente Datensignal an einem HF-Ausgang bereit. Der HF-Ausgang der Sende- und Empfangseinheit 4 ist bevorzugt über eine Kabelverbindung 9 mit dem Messobjekt 2 verbunden. In den Zeichnungsfiguren beinhaltet die Kabelverbindung 9 den Übertragungskanal 7. Dies dient einzig der Verdeutlichung, weil mögliche Fehlerquellen, wie z.B. Mehrfachausbreitung (engl. fading) oder Rauschen einzig in der Sende- und Empfangseinheit 4 dem Datensignal hinzugefügt werden können und nicht in der Kabelverbindung 9 zwischen der Sende- und Empfangseinheit 4 und dem Messobjekt 2. Die Mehrfachausbreitung kann derart eingestellt werden, dass ein sich bewegendes Messobjekt mit der Geschwindigkeit eines Fußgängers oder eines schnell fahrenden Autos simuliert wird.

Die Steuereinheit 3 und die Auswerteeinheit 5 sind in dem erfindungsgemäßen Ausführungsbeispiels aus Fig. 1 als eigenständige Computersysteme ausgebildet. Sowohl die Steuereinheit 3, als auch die Auswerteeinheit 5 verfügen über einen Pseudozufallsrauschgenerator, der zur Erzeugung der Testdaten verwendet wird. Bei dem Pseudozufallsrauschgenerator handelt es sich bevorzugt um ein linear rückgekoppeltes Schieberegister, dessen Generatorpolynom eine Sequenzlänge generiert, die der Größe eines Nutzdatenrahmens innerhalb eines Testdatenpakets in etwa entspricht.

Die gewünschte Datenrate für eine Durchsatzmessung wird innerhalb der Steuereinheit 3 und innerhalb der Auswerteeinheit 5 eingestellt, indem zuerst die konstante Übertragungszeit $\Delta t_z$ berechnet wird, die die Verzögerung zwischen den einzelnen Testdatenpaketen angibt. Dies geschieht mit nachfolgender Formel, wobei $L_N$ die Länge der Nutzdaten (engl. payload) eines Testdatenpakets in Bits und $R_N$ die gewünschte Datenrate in MBits/s angibt:

$$\Delta t_z = \frac{L_{N[Bits]}}{R_N \left[\frac{MBit}{s}\right]} \ in \ [\mu s] \qquad (1)$$

Im Weiteren wird die Zeit geprüft und von der Konstanten $\Delta t_z$ abgezogen, die zwischen dem Senden zweier aufeinanderfolgender Testdatenpakete vergangen ist. Diese Differenz wird zu einem tatsächlichen Verzögerungsparameter, der zu Anfang mit Null initialisiert wurde, hinzuaddiert, wenn einer der beiden Werte positiv ist. Ist die so ermittelte Verzögerung größer Null, dann wird um den Betrag in Mikrosekunden verzögert und kein Paket verschickt. Auf diese Weise können Schwankungen der Datenrate bei jeder Iteration ausgeglichen werden. Je nachdem, ob der Abwärtspfad (Datenübertragung von der Sende- und Empfangseinheit 4 zum Messobjekt 2) oder der Aufwärtspfad (Datenübertragung vom Messobjekt 2 zur Sende- und Empfangseinheit 4) des Messobjekts 2 getestet werden soll, werden die Testdatenpakete entweder in der Steuereinheit 3 (bei Downlinkpfad-Messung) oder in der Auswerteeinheit 5 (bei Uplinkpfad-Messung) generiert und versendet.

Zwischen der Steuereinheit 3 und der Auswerteeinheit 5 werden über die Sende- und Empfangseinheit 4 und das Messobjekt 2 Steuerdatenpakete und Testdatenpakete ausgetauscht. Bei den Steuerdatenpaketen handelt es sich um Konfigurationsdaten mit denen die Auswerteeinheit 5 für die noch folgende Messung richtig eingestellt wird. Steuerdatenpakete sind z.B. die Größe der Testdatenpakete, die Datenrate, das zu verwendende Generatorpolynom, die Anzahl der gleichzeitigen Datenströme, der zu öffnende Anschlussport für jeden Datenstrom oder ein Befehl, der mitteilt, dass die Messung beendet ist und ein Messprotokoll anfordert. Auch Bestätigungsdatenpakete (ACK) werden bevorzugt als Steuerdatenpakete versendet.

Bei Übertragung dieser Steuerdatenpakete soll der Übertragungskanal 7 indes nicht gestört sein. Dies kann über verschiedene Methoden sichergestellt werden. In Fig. 1 werden die Konfigurationsdaten bevorzugt vor der eigentlichen Übertragungsparametermessung übertragen. Sobald die Steuereinheit 3 und die Auswerteeinheit 5 richtig konfiguriert sind, teilt die Steuereinheit 3 der Sende- und Empfangseinheit 4 mit, dass der Übertragungskanal gestört werden soll. Abhängig davon, ob der Aufwärtspfad (Uplink) oder der Abwärtspfad (Downlink) des Messobjekts 2 getestet werden soll, wird der jeweils andere Pfad im Übertragungskanal 7 bevorzugt nicht gestört. Dadurch ist sichergestellt, dass die Bestätigungsdatenpakete (ACK) ungestört übertragen werden können. Nachdem die Übertragungsparametermessung beendet ist, teilt die Steuereinheit 3 der Sende- und Empfangseinheit 4 mit, dass der Übertragungskanal 7 im Weiteren nicht mehr gestört werden soll. Anschließend sendet die Steuereinheit 3 einen Befehl an die Auswerteeinheit 5, damit diese das Messprotokoll erstellt und an die Steuereinheit 3 sendet.

Fig. 2 zeigt ein Übersichtsschaltbild eines weiteren Ausführungsbeispiels der erfindungsgemäßen Messeinheit 1. Die Funktionsweise der erfindungsgemäßen Messeinheit 1 entspricht in weiten Teilen derer aus Fig. 1, weshalb auf die entsprechende Stelle der Beschreibung verwiesen wird. Im Unterschied zu der Messeinheit 1 aus Fig. 1, wo die Steuerdatenpakete über einen nicht gestörten Übertragungskanal 7 übertragen werden, werden bei der Messeinheit 1 aus Fig. 2 die Steuerdatenpakete über eine weitere, nicht gestörte Verbindung 20 zwischen der Steuereinheit 3 und der Auswerteeinheit 5 übertragen. Bei dieser weiteren Verbindung 20 handelt es sich um eine direkte Verbindung, bevorzugt z.B. um eine LAN-Verbindung, zwischen der Steuereinheit 3 und der Auswerteeinheit 5. Anstatt einer LAN-Verbindung kann es sich auch um eine serielle Verbindung oder um einen CAN-Schnittstelle (engl. controller area network; dt. Feldbussystem) handeln. Ein Vorteil besteht darin, dass der Übertragungskanal 7 auch bei Übertragung von Steuerdatenpaketen gestört sein kann, so dass keine Zeit verlorengeht, bis der gestörte Übertragungskanal 7 auf einen ungestörten Übertragungskanal 7 umgeschaltet ist. Außerdem werden dadurch Vollduplex-Messungen von Verbindungsorientierten Protokollen, wie z.B. TCP (engl. transmission control protocol; dt. Übertragungssteuerungsprotokoll) erlaubt, weil die Bestätigungsdatenpakete über die weitere Verbindung 20 übertragen werden können, was wiederum eine Zeitersparnis mit sich bringt.

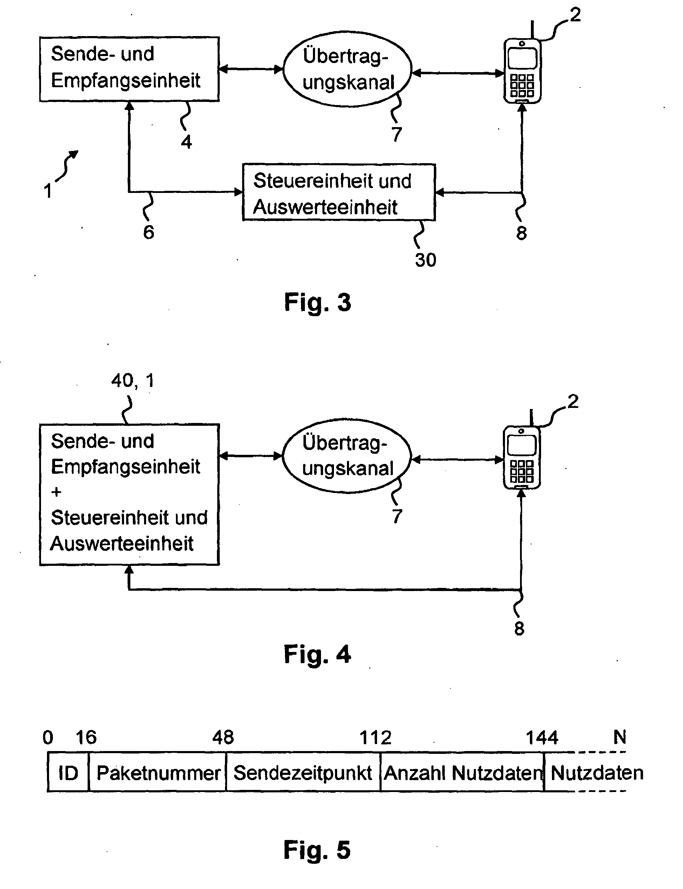

Fig. 3 zeigt ein Übersichtsschaltbild eines weiteren Ausführungsbeispiels der erfindungsgemäßen Messeinheit 1. Im Unterschied zu dem erfindungsgemäßen Ausführungsbeispiel aus Fig. 2 sind die Steuereinheit 3 und die Auswerteeinheit 5 in einem gemeinsamen Computersystem 30 integriert. Das Computersystem 30, welches die Steuereinheit 3 und die Auswerteeinheit 5 enthält, ist über die erste Verbindung 6 mit der Sende- und Empfangseinheit 4 und über die zweite Verbindung 8 mit dem Messobjekt 2 verbunden. Besonders vorteilhaft ist es, dass sowohl die Steuereinheit 3, als auch die Auswerteeinheit 5 auf dieselben Zeitgeber innerhalb des Computersystems 30 zurückgreifen können. Dies ist besonders bei Latenzmessungen und Jittermessungen von Vorteil, weil eine Synchronisierung von verschiedenen Zeitgebern entfällt. Das Computersystem 30 weist bevorzugt zumindest zwei LAN-Schnittstellen auf, von denen eine bevorzugt direkt mit der Sende- und Empfangseinheit 4 und die andere bevorzugt direkt mit dem Messobjekt 2 verbunden ist.

Fig. 4 zeigt ein Übersichtsschaltbild eines weiteren Ausführungsbeispiels der erfindungsgemäßen Messeinheit 1. Im Gegensatz zu dem erfindungsgemäßen Ausführungsbeispiel aus Fig. 3 sind die Steuereinheit 3 und die Auswerteeinheit 5 gemeinsam in dem Computersystem 40 der Sende- und Empfangseinheit 4 ausgebildet. Das Computersystem 40 der Sende- und Empfangseinheit 4 mit der Steuereinheit 3 und der Auswerteeinheit 5 ist über den Übertragungskanal 7 und über die zweite Verbindung 8 mit dem Messobjekt 2 verbunden. Besonders vorteilhaft ist, dass die Anzahl der notwendigen Computersysteme minimiert ist, wodurch die Kosten für die Messeinheit 1 niedrig gehalten werden können.

Fig. 5 zeigt einen beispielhaften Aufbau eines Pakets für die Testdaten. Innerhalb der Beschreibung werden die Wortlaute Testdaten und Testdatenpakete derart gebraucht, dass die Testdaten die Nutzdaten innerhalb eines Testdatenpakets darstellen. Die z.B. ersten 16 Bit des Pakets für die Testdaten sind für die Identifikationsdaten reserviert. In diesem Bereich der Struktur für die Testdaten wird festgehalten, zu welchem Datenstrom (engl. stream) das Paket gehört. Die Steuereinheit 3 und die Empfangseinheit 5 erlauben, dass über mehrere parallele Datenströme auf unterschiedlichen Anschlussports verschiedener Kommunikationsprotokolle wie z.B. TCP oder UDP (engl. user datagram protocol; dt. Benutzer Datagramm Protokoll) Testdatenpakete ausgetauscht werden können.

Das zweite Segment des Paketes für die Testdaten enthält die Paketnummer. Die Paketnummer wird durch einen 32 Bit Wert repräsentiert. Die Paketnummer jedes gesendeten Testdatenpakets ist bevorzugt um eins gegenüber der Paketnummer des vorherigen Testdatenpakets inkrementiert. Der Auswerteeinheit 5 wird vor Beginn der Übertragungsparametermessung in den Konfigurationsparametern mitgeteilt, wie viele Testdatenpakete gesendet werden. Die maximale Anzahl der zu sendenden und/oder zu empfangenen Testdatenpakete sind daher sowohl der Steuereinheit 3, als auch der Auswerteeinheit 5 bekannt.

In einem dritten Segment des Paketes für die Testdaten wird der Sendezeitpunkt in einem 64 Bit Wert gespeichert. Bei dem Sendezeitpunkt handelt es sich bevorzugt um den Zählerstand eines in Hardware realisierten Zählerbausteins, den alle gängigen Computersysteme aufweisen, innerhalb der Sendeeinheit 3 oder der Auswerteinheit 5 zu dem Zeitpunkt, wenn das Testdatenpaket generiert wird. Diese Information ist für die Berechnung der Latenz, wie später noch ausführlich erläutert wird, von großer Bedeutung. Es kann auch eine genaue Uhrzeit aus einem Zeitgeber gespeichert werden.

Ein viertes, 32 Bit großes Segment des Pakets für die Testdaten, enthält die Länge der Testdaten, bzw. der Nutzdaten innerhalb des Testdatenpakets.

Ein fünftes Segment des Pakets für die Testdaten enthält schließlich die zu übertragenden Testdaten, die bevorzugt mittels des Pseudozufallsrauschgenerators erzeugt werden.

Das in Fig. 5 dargestellte beispielhafte Testdatenpaket wird nach seiner Erzeugung in die Struktur für die Nutzdaten (Payload-Teil) z.B. eines TCP-Pakets oder z.B. eines UDP-Pakets eingebettet.

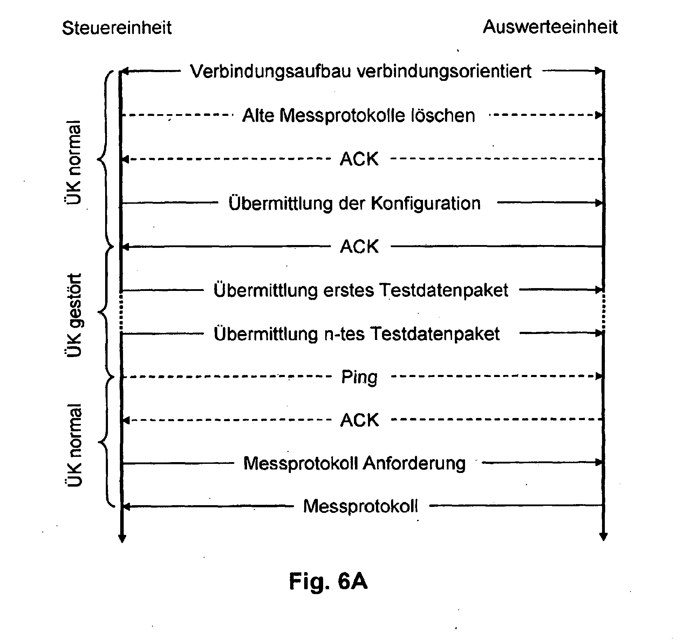

Fig. 6A zeigt ein beispielhaftes Ablaufprotokoll einer verbindungslosen Messung. Zu Beginn erfolgt ein verbindungsorientierter Verbindungsaufbau wie z.B. eine TCP-Verbindung. Diese Verbindung dient zur Konfiguration der Auswerteeinheit 5 durch die Steuereinheit 3. Optional können noch vorhandene Messprotokolle mit Übertragungsparametern von vorherigen Messobjekten 2 gelöscht werden. Die Übertragung eines solchen Befehls wird aufgrund der verbindungsorientierten Verbindung durch Versenden von Bestätigungsdatenpaketen (ACK-Daten; engl. Acknowledge) quittiert. Anschließend werden die Konfigurationsparameter von der Steuereinheit 3 an die Auswerteeinheit 5 übertragen. Der Erhalt der Konfigurationsparameter wird ebenfalls wieder durch Versenden von Bestätigungsdatenpaketen quittiert. Der Übertragungskanal 7 ist bis zu diesem Zeitpunkt, sofern dem Ablaufprotokoll das erfindungsgemäße Ausführungsbeispiel der Messeinheit 1 aus Fig. 1 zugrunde liegt, nicht gestört. Anschließend wir der Übertragungskanal 7 gezielt durch Hinzufügen von Mehrfachausbreitungen und/oder Rauschen gestört. Im Weiteren werden 1 bis n Testdatenpakete übertragen, wobei für n gilt:

$n \in N \cap n > 1$. Die Testdatenpakete weisen die Struktur aus Fig. 5 auf, die allerdings in ein TCP-Paket oder UDP-Paket eingebettet sind.

In Fig. 6A werden die Testdatenpakete in ein UDP-Paket eingebettet, ein Versenden von Bestätigungsdatenpaketen bleibt aus. Die Testdatenpakete werden, wie erläutert, vor dem Absenden verzögert, um eine vorbestimmte Datenrate zu erreichen. Die einzelnen Testdatenpakete können auch verschiedenen Strömen (engl. streams) angehörig sein. Die Testdatenpakete können auch in ein TCP-Paket eingebettet sein, wobei in diesem Fall Bestätigungsdatenpakete über einen nicht gestörten Übertragungskanal 7 oder eine weitere Verbindung 20 übertragen werden. Im Falle einer Abwärtspfad-Messung (engl. downlink) ist der Aufwärtspfad (engl. uplink) nicht gestört. Für den Fall, dass die erfindungsgemäße Messeinheit 1 nach einem der Ausführungsbeispiele aus einer der Figuren 2, 3 oder 4 realisiert ist, können gleichzeitig auch Testdatenpakete von der Auswerteeinheit 5 zu der Steuereinheit 3 übertragen werden (vollduplex). Die Testzeit wird dadurch nochmals deutlich verringert.

Nach dem Ende der Durchsatzmessung wird die Störung des Übertragungskanals 7 aufgehoben und die Steuereinheit 3 prüft optional, ob die Auswerteeinheit 5 erreichbar ist. Im Anschluss daran übermittelt die Steuereinheit 3 einen Befehl an die Auswerteeinheit 5, dass diese das Messprotokoll mit den gemessenen Übertragungsparametern erstellen und übertragen soll. Für den Fall, dass die erfindungsgemäße Messeinheit 1 nach einem der Ausführungsbeispiele aus einer der Figuren 2, 3 oder 4 aufgebaut ist, muss die Störung auf dem Übertragungskanal 7 nicht aufgehoben werden. Der Befehl zur Anforderung des Messprotokolls wird in diesem Fall über die weitere Verbindung 20 übertragen, die in den Fig. 3 und 4 innerhalb des Computersystems 30 und 40 zu finden ist.

Für den Fall, dass eine Aufwärtspfad-Messung (engl. uplink) durchgeführt wird, übermittelt die Auswerteeinheit 5 der Steuereinheit 3 einen Befehl, dass die Messung beendet ist. Die Steuereinheit 3 erzeugt daraufhin selbst das Messprotokoll, wobei ggf. noch gemessene Round-Trip-Delay-Zeiten von der Auswerteeinheit 5 abgerufen werden.

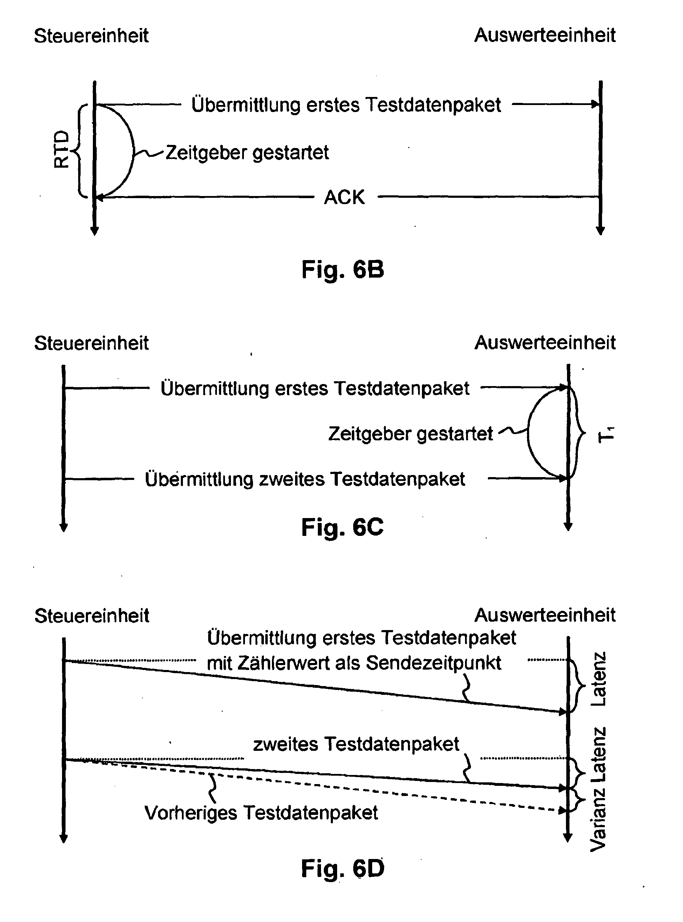

Fig. 6B zeigt ein beispielhaftes Ablaufprotokoll zur Messung der Round-Trip-Delay für eine Abwärtspfad-Messung am Messobjekt 2. Die Testdatenpakete sind hierzu in ein verbindungsorientierte Kommunikationsprotokoll, wie z.B. TCP eingebettet. Zu Beginn wird ein solches Testdatenpaket von der Steuereinheit 3 an die Auswerteeinheit 5 versendet. Sobald das Testdatenpaket versendet wird, wird ein Zeitgeber gestartet, oder es wird der aktuelle Wert einer Zählereinheit gespeichert. Sobald das Datenpaket von der Auswerteeinheit 5 empfangen wird, werden Bestätigungsdaten (ACK) zurückgesendet. Sobald diese Bestätigungsdaten von der Steuereinheit 3 empfangen werden, wird der Zeitgeber gestoppt oder es wird eine Differenz zwischen dem aktuellen Wert der Zählereinheit und dem gespeicherten vorherigen Wert der Zählereinheit gebildet. Die Zeitdifferenz vom Versenden des Testdatenpakets bis zum Eintreffen des Bestätigungsdatenpakets wird auch als Round-Trip-Delay (Rundlaufverzögerung) bezeichnet. Die Bestätigungsdatenpakete können dabei sowohl über einen ungestörten Rückkanal des Übertragungskanals 7 übertragen werden, als auch über die weitere Verbindung 20. Für den Fall dass ein Testdatenpaket nicht empfangen wird, wird der Zeitgeber automatisch beim Versenden des darauffolgenden Testdatenpakets gestoppt. In diesem Fall kann auch eine Paketfehlerrate berechnet werden, durch die ebenfalls die Güte des Messobjekts 2 beschrieben wird.

Bei dieser Konstellation kann der erzielte Datendurchsatz auch direkt von der Steuereinheit 3 berechnet werden. Wenn von n gesendeten Testdatenpakten p Bestätigungsdaten empfangen werden, wobei gilt: n ≥ p, dann berechnet sich der Datendurchsatz zu:

$$D = \frac{L_N \cdot p}{T_{ges}} \qquad (2)$$

Wobei $L_N$ die Länge der Nutzdaten und $T_{ges}$ die Übertragungsdauer darstellen. Für den Fall, dass eine Aufwärtspfad-Messung (uplink) stattfindet, werden die Round-Trip-Delay und ggf. der Datendurchsatz von der Auswerteeinheit 5 gemessen.

Fig. 6C zeigt ein beispielhaftes Ablaufprotokoll zur Messung des Datendurchsatzes bei Verwendung eines verbindungslosen Verbindungsprotokolls, wie z.B. UDP. Sobald die Auswerteeinheit 5 ein Testdatenpaket empfängt, wird ein Zeitgeber gestartet oder es wird der aktuelle Wert einer Zählereinheit gespeichert. Sobald ein weiteres Testdatenpaket von der Auswerteeinheit 5 empfangen wird, wird der Zeitgeber gestoppt oder es wird eine Differenz zwischen dem vorherigen gespeicherten Wert der Zählereinheit und dem aktuellen Wert der Zählereinheit gebildet. Gleichzeitig wird erneut ein Zeitgeber gestartet oder es wird ein neuer Wert der Zählereinheit gespeichert. Sobald die Auswerteeinheit den Befehl empfängt, dass die Messung beendet ist und das Messprotokoll erstellt werden soll, wird der letzte Zeitgeber gestoppt oder die letzte Differenz gebildet. Der Datendurchsatz berechnet sich anschließend wie folgt:

$$D = \frac{L_N \cdot p}{\sum_{i=1}^{p} T_i} \ D = \frac{L_N \cdot p}{T_{ges}} \qquad (3) \quad ,$$

wobei $L_N$ die Länge der Nutzdaten, p die Anzahl der empfangenen Testdatenpakete und $T_i$ die Zeit zwischen den einzelnen empfangenen Testdatenpaketen darstellt. Der Auswerteeinheit 5 wurden zu Beginn die Konfigurationsdaten übermittelt, die auch die Gesamtanzahl n der zu sendenden Testdatenpakete enthält. Anhand der Anzahl der empfangenen Testdatenpakete p kann die Paketfehlerrate bestimmt werden.

Fig. 6D zeigt ein beispielhaftes Ablaufprotokoll zur Messung der Latenz und des Jitters (Schwankungen) bei Verwendung eines verbindungslosen Verbindungsprotokolls, wie z.B. UDP. Sobald die Steuereinheit 4 das Testdatenpaket generiert wird der aktuelle Wert eines Zeitgebers oder der aktuelle Wert einer Zählereinheit in der Struktur für den Sendezeitpunkt innerhalb des Testdatenpakets gespeichert. Die Auswerteeinheit 5 ist bevorzugt im selben Computersystem 30, 40 integriert wie die Steuereinheit 4, so dass die Auswerteeinheit auf den gleichen Zeitgeber oder die gleiche Zähleinheit zugreifen kann, wie die Steuereinheit 4. Alternativ muss zuvor ein Zeitgeber oder eine Zählereinheit der Auswerteeinheit 5 mit dem Zeitgeber oder der Zählereinheit der Steuereinheit 3 synchronisiert werden. Sobald die Auswerteeinheit 5 das Testdatenpaket empfängt, kann die Latenz anhand der Zeitdifferenz oder anhand der Zählerdifferenz bestimmt werden. Wird im Weiteren ein zweites Testdatenpaket übertragen, so kann auch von diesem die Latenz bestimmt werden, die sich von der Latenz des ersten Testdatenpakets unterscheiden kann. Schließlich kann ein Mittelwert für alle Latenzen gebildet werden und die Varianz (Abweichung von dem Mittelwert), bzw. der Jitter bestimmt werden. Selbiges gilt auch für die Aufwärtspfadmessung (engl. uplink), wenn Testdatenpakete von der Auswerteeinheit 5 zu der Steuereinheit 3 übertragen werden.

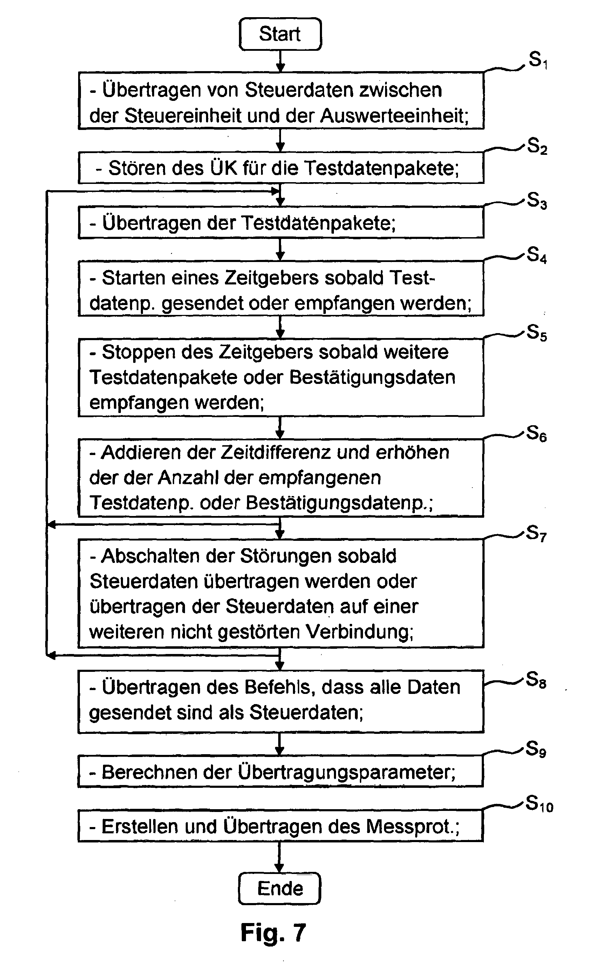

Fig. 7 zeigt ein Flussdiagramm für ein Ausführungsbeispiel des erfindungsgemäßen Verfahrens zur Übertragungsparametermessung eines Messobjekts 2. In einem ersten Verfahrensschritt $S_1$ werden Steuerdatenpakete zwischen der Steuereinheit 3 und der Auswerteeinheit 5 übertragen. Dabei übermittelt die Steuereinheit 3 Konfigurationsparameter für die spätere Übertragungsparametermessung an die Auswerteeinheit 5. Zu den Konfigurationsparametern gehört z.B. die Anzahl der zu übertragenen Testdatenpakete, die Datenrate, die Anzahl der Datenströme, die Art des zu verwendenden Kommunikationsprotokolls, die Art des Generatorpolynoms, usw.. Diese Steuerdatenpakete werden bevorzugt über ein verbindungsorientiertes Kommunikationsprotokoll, wie z.B. TCP, übertragen. Der Übertragungskanal 7 ist in diesem Fall nicht gestört oder es werden die Steuerdatenpakete über die weitere Verbindung 20 zwischen der Steuereinheit 3 und der Auswerteeinheit 5 ausgetauscht.

In einem zweiten Verfahrensschritt $S_2$ wird der Übertragungskanal 7, der zum Übertragen von den Testdatenpaketen zwischen der Steuereinheit 3 und der Auswerteeinheit 6 verwendet wird, gezielt gestört. Dabei können Störungen wie z.B. Mehrfachausbreitungen oder Rauschen simuliert werden.

In einem dritten Verfahrensschritt $S_3$ werden die Testdatenpakete entweder zwischen der Steuereinheit 3 und der Auswerteeinheit 5 oder zwischen der Auswerteeinheit 5 und der Steuereinheit 3 übertragen, je nachdem ob der Abwärtspfad (engl. downlink) oder der Aufwärtspfad (engl. uplink) gemessen werden soll. Die Testdatenpakete können dabei in TCP-Paketen oder UDP-Paketen eingebettet sein. Innerhalb der Struktur für das Testdatenpaket kann auch der Sendezeitpunkt gespeichert werden. Hierzu wird die aktuelle Zeit des Zeitgebers oder der aktuelle Wert der Zählereinheit in der entsprechenden 64 Bit großen Struktur innerhalb des Testdatenpakets gespeichert.

In einem vierten Verfahrensschritt $S_4$ wird in der Steuereinheit 3 oder der Auswerteeinheit 5 ein Zeitgeber gestartet oder es wird der Wert einer Zählereinheit gespeichert, sobald Testdatenpakete versendet oder empfangen werden. In der Figurenbeschreibung zu Fig. 6B sind die Vorteile erläutert, wenn ein Zeitgeber in der Einheit 3, 5 gestartet wird, die die Testdatenpakete versendet um anhand des Bestätigungsdatenpakets die Round-Trip-Delay zu berechnen. Fig. 6C illustriert dabei die Vorteile wenn der Zeitgeber auf der Empfängerseite der Testdatenpakete bei Empfang eines Testdatenpakets gestartet wird. Neben einer Zeit kann auch der Wert einer Zählereinheit gespeichert werden, die mit einem festen Takt hochzählt.

In einem weiteren Verfahrensschritt $S_5$ wird der Zeitgeber gestoppt, sobald weitere Testdatenpakete oder ein Bestätigungsdatenpaket empfangen werden. Fig. 6B zeigt wie in diesem Fall die Round-Trip-Delay berechnet werden kann, Fig. 6C zeigt, wie der Datendurchsatz bestimmt wird und Fig. 6D illustriert, wie die Latenz und aus der Latenz der Jitter bestimmt werden kann.

In einem sechsten Verfahrensschritt $S_6$ wird die Zeitdifferenz, die sich aus dem empfangenen vorletzten Testdatenpaket zu dem letzten empfangenen Testdatenpaket ergibt, zu den vorherigen miteinander addierten Zeitdifferenzen addiert. Außerdem wird die Anzahl der empfangenen Testdatenpakete oder ggf. Bestätigungsdatenpakete um eins erhöht. Das Ziel dabei ist, die Anzahl der empfangenen Testdatenpakete zu zählen und die Zeit, wie lange es dauert, bis die Testdatenpakete empfangen sind, zu erfassen, um damit den Datendurchsatz über den gestörten Übertragungskanal 7 zu berechnen. Nach Ende des sechsten Verfahrensschritts $S_6$ kann der dritte Verfahrensschritt $S_3$ wiederholt werden, indem neue Testdatenpakete gesendet werden.

Für den Fall dass keine Testdatenpakete mehr übertragen werden sollen, oder für den Fall, dass die Testdatenpakete unter Verwendung eines verbindungsorientierten Kommunikationsprotokolls, wie z.B. TCP übertragen werden sollen, werden in einem siebten Verfahrensschritt $S_7$ die Störungen auf dem Übertragungskanal 7 abgeschaltet, oder es werden die Steuerdatenpakete auf einer weiteren nicht gestörten Verbindung 20 übertragen. Bei den Steuerdatenpaketen kann es sich bei Verwendung eines verbindungsorientierten Protokolls um die Bestätigungsdatenpakete handeln, mit denen die Testdatenpakete quittiert werden. Für den Fall, dass weitere Testdatenpakete unter Verwendung eines Verbindungsorientierten Protokolls übertragen werden sollen, kann der Verfahrensschritt $S_3$ erneut ausgeführt werden.

Für den Fall, dass keine Testdatenpakete mehr übertragen werden sollen, wird der Verfahrensschritt $S_8$ ausgeführt, in welchem ein Befehl von der Steuereinheit 3 an die Auswerteeinheit 5 oder von der Auswerteeinheit 5 an die Steuereinheit 3 übertragen wird, dass alle Testdatenpakete gesendet wurden.

In einem neunten Verfahrensschritt $S_9$ werden die Übertragungsparameter berechnet. Der Datendurchsatz ermittelt sich nach Gleichung (3) wonach die Anzahl der übertragenen Bits ermittelt wird und durch die Gesamtzeit dividiert wird. Die Berechnung der Round-Trip-Delay für ein Testdatenpaket wird in der Figurenbeschreibung zu Fig. 6B erläutert. Nach Ende der Messung werden sämtliche Round-Trip-Delay-Werte gemittelt. Selbiges gilt auch für die Berechnung der Latenz und des Jitters. Die Paketfehlerrate berechnet sich aus dem Verhältnis der empfangenen Testdatenpakete zu der im Vorfeld erwarteten Anzahl an maximal zu empfangenen Testdatenpaketen.

In einem letzten Verfahrensschritt $S_{10}$ wird das Messprotokoll durch die Steuereinheit 3 und/oder die Auswerteeinheit 5 erstellt und ggf. von der Auswerteeinheit 5 an die Steuereinheit 3 übertragen. Die Steuereinheit fügt gegebenenfalls beide Messprotokolle zusammen und gibt diese auf einer nicht dargestellten Bildschirmeinheit aus.

Während die vorliegende Erfindung in Bezug auf die bevorzugten Ausführungsformen beschrieben wurde, werden außerdem dem Fachmann andere Abwandlungen offensichtlich sein, die im Schutzbereich der Erfindung liegen, wie er in den untenstehenden Ansprüchen definiert wird.

## Patentansprüche

1. Messeinheit (1) zur Übertragungsparametermessung eines Messobjekts (2) aufweisend eine Steuereinheit (3), eine Sende- und Empfangseinheit (4) und eine Auswerteeinheit (5),
wobei die Sende- und Empfangseinheit (4) über eine erste Verbindung (6) mit der Steuereinheit (3) und über zumindest einen Übertragungskanal (7) mit dem Messobjekt (2) verbunden ist,
wobei Bestätigungsdatenpakete als Steuerdatenpakete versendet werden,
wobei das Messobjekt (2) über eine zweite Verbindung (8) mit der Auswerteeinheit (5) verbunden ist,
wobei zur Übertragungsparametermessung des Messobjekts (2) zwischen der Steuereinheit (3) und der Auswerteeinheit (5) Steuerdatenpakete und Testdatenpakete getrennt übertragen werden und

wobei der Übertragungskanal (7) für die Testdatenpakete gezielt störbar ist,
wobei abhängig davon, ob ein Aufwärtspfad oder ein Abwärtspfad des Messobjekts (2) getestet werden soll, der jeweils andere Pfad im Übertragungskanal (7) nicht gestört wird, so dass die Bestätigungsdatenpakete ungestört übertragen werden können.

2. Messeinheit nach Anspruch 1,
   **dadurch gekennzeichnet,**
   **dass** es sich bei dem Übertragungskanal (7) um einen simulierten Funkübertragungskanal handelt.

3. Messeinheit nach einem der vorherigen Ansprüche,
   **dadurch gekennzeichnet,**
   **dass** der Übertragungskanal (7) bei Übertragung der Steuerdatenpakete nicht gestört ist.

4. Messeinheit nach einem der vorherigen Ansprüche,
   **dadurch gekennzeichnet,**
   **dass** Störungen wie Mehrfachausbreitungen und/oder Rauschen auf den Übertragungskanal (7) zuschaltbar sind.

5. Messeinheit nach einem der vorherigen Ansprüche,
   **dadurch gekennzeichnet,**
   **dass** die Steuerdatenpakete über einen nicht gestörten Übertragungskanal (7) oder über zumindest eine weitere, nicht gestörte Verbindung (20) übertragbar sind.

6. Messeinheit nach Anspruch 5,
   **dadurch gekennzeichnet,**
   **dass** die weitere Verbindung (20) eine direkte Verbindung zwischen der Steuereinheit (3) und der Auswerteeinheit (5) ist.

7. Messeinheit nach einem der vorherigen Ansprüche,
   **dadurch gekennzeichnet,**
   **dass** es sich bei der Übertragungsparametermessung um eine Durchsatzmessung und/oder eine Latenzzeitmessung und/oder eine Rundlauf-Verzögerungs-Messung und/oder eine Schwankungs-Messung und/oder eine Paketfehlerrate handelt.

8. Messeinheit nach einem der vorherigen Ansprüche,
   **dadurch gekennzeichnet,**
   **dass** die Steuereinheit (3) und die Auswerteeinheit (5) in einem gemeinsamen Computersystem (30) ausgebildet sind oder dass die Steuereinheit (3) und die Auswerteeinheit (5) gemeinsam in dem Computersystem (40) der Sende- und Empfangseinheit (4) ausgebildet sind.

9. Verfahren zur Übertragungsparametermessung eines Messobjekts (2) mit einer Messeinheit (1), die eine Steuereinheit (3), eine Sende- und Empfangseinheit (4) und eine Auswerteeinheit (5) aufweist, wobei die Sende- und Empfangseinheit (4) über eine erste Verbindung (6) mit der Steuereinheit (3) und über einen Übertragungskanal (7) mit dem Messobjekt (2) verbunden ist, wobei Bestätigungsdatenpakete als Steuerdatenpakete versendet werden und wobei das Messobjekt (2) über eine zweite Verbindung (8) mit der Auswerteeinheit (5) verbunden ist, wobei abhängig davon, ob ein Aufwärtspfad oder ein Abwärtspfad des Messobjekts (2) getestet werden soll, der jeweils andere Pfad im Übertragungskanal (7) nicht gestört wird, so dass die Bestätigungsdatenpakete ungestört übertragen werden können, mit folgenden Verfahrensschritten:

   - Übertragen ($S_1$) von Steuerdatenpaketen zwischen der Steuereinheit (3) und der Auswerteeinheit (5);
   - Gezieltes Stören ($S_2$) des Übertragungskanals (7), der zum Übertragen von Testdatenpaketen zwischen der Steuereinheit (3) und der Auswerteeinheit (5) verwendet wird;
   - Übertragen ($S_3$) von Testdatenpaketen zwischen der Steuereinheit (3) und der Auswerteeinheit (5) oder der Auswerteeinheit (5) und der Steuereinheit (3).

10. Verfahren nach Anspruch 9,
    **gekennzeichnet durch**
    folgende Verfahrensschritte:

- Starten (S$_4$) eines Zeitgebers in der Steuereinheit (3) oder der Auswerteeinheit (5), sobald Testdatenpakete gesendet oder empfangen werden;
- Stoppen (S$_5$) des Zeitgebers in der Steuereinheit (3) oder der Auswerteeinheit (5), sobald weitere Testdatenpakete oder Bestätigungsdatenpakete empfangen werden;
- Addieren (S$_6$) der vergangenen Zeit in einer Speichereinheit und Inkrementieren der Anzahl der empfangenen Testdatenpakete oder Bestätigungsdatenpakete.

11. Verfahren nach Anspruch 9 oder 10,
    **gekennzeichnet durch**
    folgenden Verfahrensschritt:

    - Abschalten (S$_7$) der Störungen sobald Steuerdatenpakete übertragen werden oder Übertragen der Steuerdatenpakete auf einer weiteren, nicht gestörten Verbindung (20), zwischen der Steuereinheit (3) und der Auswerteeinheit (5).

12. Verfahren nach einem der Ansprüche 9 bis 11,
    **gekennzeichnet durch**
    folgenden Verfahrensschritt:

    - Übertragen (S$_8$) eines Befehls, dass alle Testdatenpakete gesendet sind, von der Steuereinheit (3) oder der Auswerteeinheit (5) an die Auswerteeinheit (5) oder an die Steuereinheit (3) als Steuerdatenpaket.

13. Verfahren nach Anspruch 12,
    **gekennzeichnet durch**
    folgenden Verfahrensschritt:

    - Berechnen (S$_9$) der Übertragungsparameter wie Datendurchsatz und/oder Latenz und/oder Rundlauf-Verzögerung und/oder Schwankungen und/oder Paketfehlerrate **durch** die Steuereinheit (3) oder die Auswerteeinheit (5).

14. Verfahren nach Anspruch 13,
    **gekennzeichnet durch**
    folgenden Verfahrensschritt:

    - Erstellen (S$_{10}$) eines Messprotokolls **durch** die Steuereinheit (3) und/oder Erstellen eines Messprotokolls und Übermitteln des Messprotokolls als Steuerdatenpaket **durch** die Auswerteeinheit (5) an die Steuereinheit (3).

**Claims**

1. Measuring unit (1) for measuring transmission parameters for a measurement object (2), having a control unit (3), a transmitting and receiving unit (4) and an evaluation unit (5),
   the transmitting and receiving unit (4) being connected to the control unit (3) via a first connection (6) and being connected to the measurement object (2) via at least one transmission channel (7),
   confirmation data packets being sent as control data packets,
   the measurement object (2) being connected to the evaluation unit (5) via a second connection (8), control data packets and test data packets being transmitted separately between the control unit (3) and the evaluation unit (5) in order to measure transmission parameters for the measurement object (2), and
   it being possible to deliberately interfere with the transmission channel (7) for the test data packets,
   the respective other path in the transmission channel (7) not being interfered with, depending on whether an uplink path or a downlink path of the measurement object (2) is intended to be tested, with the result that the confirmation data packets can be transmitted without interference.

2. Measuring unit according to Claim 1,
   **characterized in that**
   the transmission channel (7) is a simulated radio transmission channel.

3. Measuring unit according to one of the preceding claims,

**characterized in that**
the transmission channel (7) is not interfered with when transmitting the control data packets.

4. Measuring unit according to one of the preceding claims,
   **characterized in that**
   interference such as multiple propagation and/or noise can be connected to the transmission channel (7).

5. Measuring unit according to one of the preceding claims,
   **characterized in that**
   the control data packets can be transmitted via a transmission channel (7) which does not have interference or via at least one further connection (20) which does not have interference.

6. Measuring unit according to Claim 5,
   **characterized in that**
   the further connection (20) is a direct connection between the control unit (3) and the evaluation unit (5).

7. Measuring unit according to one of the preceding claims,
   **characterized in that**
   the transmission parameter measurement is a throughput measurement and/or a latency measurement and/or a round-trip delay measurement and/or a fluctuation measurement and/or a packet error rate.

8. Measuring unit according to one of the preceding claims,
   **characterized in that**
   the control unit (3) and the evaluation unit (5) are formed in a common computer system (30), or **in that** the control unit (3) and the evaluation unit (5) are jointly formed in the computer system (40) of the transmitting and receiving unit (4).

9. Method for measuring transmission parameters for a measurement object (2) using a measuring unit (1) which has a control unit (3), a transmitting and receiving unit (4) and an evaluation unit (5), the transmitting and receiving unit (4) being connected to the control unit (3) via a first connection (6) and being connected to the measurement object (2) via a transmission channel (7),
   confirmation data packets being sent as control data packets, and the measurement object (2) being connected to the evaluation unit (5) via a second connection (8), the respective other path in the transmission channel (7) not being interfered with depending on whether an uplink path or a downlink path of the measurement object (2) is intended to be tested, with the result that the confirmation data packets can be transmitted without interference, having the following method steps:

   - transmitting ($S_1$) control data packets between the control unit (3) and the evaluation unit (5) ;
   - deliberately interfering with ($S_2$) the transmission channel (7) used to transmit test data packets between the control unit (3) and the evaluation unit (5);
   - transmitting ($S_3$) test data packets between the control unit (3) and the evaluation unit (5) or the evaluation unit (5) and the control unit (3).

10. Method according to Claim 9,
    **characterized by**
    the following method steps:

    - starting ($S_4$) a timer in the control unit (3) or the evaluation unit (5) as soon as test data packets are transmitted or received;
    - stopping ($S_5$) the timer in the control unit (3) or the evaluation unit (5) as soon as further test data packets or confirmation data packets are received;
    - adding ($S_6$) the elapsed time in a storage unit and incrementing the number of received test data packets or confirmation data packets.

11. Method according to Claim 9 or 10,
    **characterized by**
    the following method step:

- disconnecting ($S_7$) the interference as soon as control data packets are transmitted or transmitting the control data packets on a further connection (20) without interference between the control unit (3) and the evaluation unit (5).

**12.** Method according to one of Claims 9 to 11,
**characterized by**
the following method step:

- transmitting ($S_8$) a command indicating that all test data packets have been transmitted from the control unit (3) or the evaluation unit (5) to the evaluation unit (5) or to the control unit (3) as a control data packet.

**13.** Method according to Claim 12,
**characterized by**
the following method step:

- calculating ($S_9$) the transmission parameters such as data throughput and/or latency and/or round-trip delay and/or fluctuations and/or packet error rate by means of the control unit (3) or the evaluation unit (5).

**14.** Method according to Claim 13,
**characterized by**
the following method step:

- creating ($S_{10}$) a measuring log by means of the control unit (3) and/or creating a measuring log and transmitting the measuring log to the control unit (3) as a control data packet by means of the evaluation unit (5).


**Revendications**

**1.** Unité de mesure (1) pour la mesure de paramètres de transmission d'un objet à mesurer (2) comportant une unité de commande (3), une unité d'émission et de réception (4) et une unité d'évaluation (5),
dans laquelle l'unité d'émission et de réception (4) est reliée à l'unité de commande (3) par l'intermédiaire d'une première liaison (6) et à l'objet à mesurer par l'intermédiaire d'au moins un canal de transmission (7),
dans laquelle des paquets de données de confirmation sont envoyés en tant que paquets de données de commande,
dans laquelle l'objet à mesurer (2) est relié à l'unité d'évaluation (5) par l'intermédiaire d'une seconde liaison (8),
dans laquelle des paquets de données de commande et des paquets de données de test sont transmis séparément entre l'unité de commande (3) et l'unité d'évaluation (5) pour la mesure des paramètres de transmission de l'objet à mesurer (2) et
dans laquelle le canal de transmission (7) pour les paquets de données de test peut être perturbé intentionnellement,
dans laquelle indépendamment du fait qu'un trajet montant ou un trajet descendant de l'objet à mesurer (2) doit être testé, l'autre trajet respectif dans le canal de transmission (7) n'est pas perturbé, de sorte que les paquets de données de confirmation peuvent être transmis de façon non perturbée.

**2.** Unité de mesure selon la revendication 1,
**caractérisée en ce que**
concernant le canal de transmission (7), il s'agit d'un canal de radio transmission simulé.

**3.** Unité de mesure selon l'une des revendications précédentes,
**caractérisée en ce que**,
le canal de transmission (7) n'est pas perturbé lors de la transmission des données de paquets de commande.

**4.** Unité de mesure selon l'une des revendications précédentes,
**caractérisée en ce que**
des perturbations comme des propagations multivoies et/ou des bruits sur le canal de transmission (7) peuvent être commutées.

**5.** Unité de mesure selon l'une des revendications précédentes,
**caractérisée en ce que**
les paquets de données de commande peuvent être transmis par l'intermédiaire d'un canal de transmission non perturbé (7) ou par l'intermédiaire d'au moins une autre liaison non perturbée (20).

6.  Unité de mesure selon la revendication 5,
    **caractérisée en ce que**
    l'autre liaison (20) est une liaison directe entre l'unité de commande (3) et l'unité d'évaluation (5).

7.  Unité de mesure selon l'une des revendications précédentes,
    **caractérisée en ce que**
    dans le cas de la mesure de paramètres de transmission, il s'agit d'une mesure de débit et/ou d'une mesure de temps de latence et/ou d'une mesure de temps de transmission aller-retour et/ou d'une mesure de fluctuation et/ou d'un taux d'erreur de paquets.

8.  Unité de mesure selon l'une des revendications précédentes,
    **caractérisée en ce que**
    l'unité de commande (3) et l'unité d'évaluation (5) sont réalisées dans un système informatique conjoint (30) ou **en ce que** l'unité de commande (3) et l'unité d'évaluation (5) sont réalisées conjointement dans le système informatique (40) de l'unité d'émission et de réception (4).

9.  Procédé de mesure des paramètres de transmission d'un objet à mesurer (2) comprenant une unité de mesure (1), qui comporte une unité de commande (3), une unité d'émission et de réception (4) et une unité d'évaluation (5), dans laquelle l'unité d'émission et de réception (4) est reliée à l'unité de commande (3) par l'intermédiaire d'une première liaison (6) et à l'objet à mesurer par l'intermédiaire d'un canal de transmission (7), dans laquelle des paquets de données de confirmation sont envoyés en tant que paquets de données de commande et dans laquelle l'objet à mesurer (2) est relié à l'unité d'évaluation (5) par l'intermédiaire d'une seconde liaison (8), dans laquelle, indépendamment du fait qu'un trajet montant ou un trajet descendant de l'objet à mesurer (2) doit être testé, l'autre trajet respectif n'est pas perturbé dans le canal de transmission (7), de sorte que les paquets de données de confirmation peuvent être transmis de façon non perturbée, comportant les étapes de procédé suivantes :

    - la transmission ($S_1$) de paquets de données de commande entre l'unité de commande (3) et l'unité d'évaluation (5) ;
    - une perturbation intentionnelle ($S_2$) du canal de transmission (7), qui est utilisé pour la transmission de paquets de données de test entre l'unité de commande (3) et l'unité d'évaluation (5) ;
    - la transmission ($S_3$) de paquets de données de test entre l'unité de commande (3) et l'unité d'évaluation (5) ou l'unité d'évaluation (5) et l'unité de commande (3).

10. Procédé selon la revendication 9,
    **caractérisé par**
    les étapes de procédé suivantes :

    - le démarrage ($S_4$) d'une horloge dans l'unité de commande (3) ou dans l'unité d'évaluation (5), dès que des paquets de données de test sont envoyés ou reçus ;
    - l'arrêt ($S_5$) de l'horloge dans l'unité de commande (3) ou l'unité d'évaluation (5), dès que d'autres paquets de données de test ou des paquets de données de confirmation sont envoyés ;
    - l'ajout ($S_6$) du temps passé dans une unité de mémoire et l'incrémentation du nombre des paquets de données de test ou des paquets de données de confirmation reçus.

11. Procédé selon la revendication 9 ou 10,
    **caractérisé par**
    l'étape de procédé suivante :

    - la neutralisation ($S_7$) des perturbations dès que des paquets de données de commande sont envoyés ou la transmission des paquets de données de commande sur une autre liaison non perturbée (20), entre l'unité de commande (3) et l'unité d'évaluation (5).

12. Procédé selon l'une des revendications 9 à 11,
    **caractérisé par**
    l'étape de procédé suivante :

- la transmission (S$_8$) d'une instruction, selon laquelle tous les paquets de données de test sont envoyés, de l'unité de commande (3) ou de l'unité d'évaluation (5) à l'unité d'évaluation (5) ou à l'unité de commande (3) en tant que paquets de données de commande.

13. Procédé selon la revendication 12,
**caractérisé par**
l'étape de procédé suivante :

- le calcul (S$_9$) des paramètres de transmission comme le débit de données et/ou la latence et/ou le temps de transmission aller-retour et/ou les fluctuations et/ou le taux d'erreur de paquets par l'unité de commande (3) ou l'unité d'évaluation (5).

14. Procédé selon la revendication 13,
**caractérisé par**
l'étape de procédé suivante :

- le réglage (S$_{10}$) d'un protocole de mesure par l'unité de commande (3) et/ou le réglage d'un protocole de mesure et la transmission du protocole de mesure en tant que paquets de données de commande par l'unité d'évaluation (5) à l'unité de commande (3).

**Fig. 1**

**Fig. 2**

Fig. 3

Fig. 4

| 0 | 16 | 48 | 112 | 144 | N |
|---|---|---|---|---|---|
| ID | Paketnummer | Sendezeitpunkt | Anzahl Nutzdaten | Nutzdaten | |

Fig. 5

Steuereinheit                                    Auswerteeinheit

ÜK normal

  —— Verbindungsaufbau verbindungsorientiert ——→

  ------- Alte Messprotokolle löschen -----------→

  ←----------------- ACK -------------------

  ———— Übermittlung der Konfiguration ————→

  ←———————— ACK ————————

ÜK gestört

  ———— Übermittlung erstes Testdatenpaket ————→

  ———— Übermittlung n-tes Testdatenpaket ————→

  ---------------- Ping ----------------→

ÜK normal

  ←---------------- ACK ----------------

  ———— Messprotokoll Anforderung ————→

  ←———— Messprotokoll ————

**Fig. 6A**

Steuereinheit        Auswerteeinheit

Übermittlung erstes Testdatenpaket

RTD

Zeitgeber gestartet

ACK

## Fig. 6B

Steuereinheit        Auswerteeinheit

Übermittlung erstes Testdatenpaket

Zeitgeber gestartet $\quad T_1$

Übermittlung zweites Testdatenpaket

## Fig. 6C

Steuereinheit        Auswerteeinheit

Übermittlung erstes Testdatenpaket
mit Zählerwert als Sendezeitpunkt    Latenz

zweites Testdatenpaket

Varianz Latenz

Vorheriges Testdatenpaket

## Fig. 6D

```
                    ┌──────────┐
                    │  Start   │
                    └────┬─────┘
                         │                              S₁
   ┌─────────────────────▼─────────────────────┐
   │ - Übertragen von Steuerdaten zwischen      │
   │   der Steuereinheit und der Auswerteeinheit;│
   └─────────────────────┬─────────────────────┘
                         │                              S₂
   ┌─────────────────────▼─────────────────────┐
   │   - Stören des ÜK für die Testdatenpakete; │
   └─────────────────────┬─────────────────────┘
                         │                              S₃
   ┌─────────────────────▼─────────────────────┐
   │   - Übertragen der Testdatenpakete;        │
   └─────────────────────┬─────────────────────┘
                         │                              S₄
   ┌─────────────────────▼─────────────────────┐
   │ - Starten eines Zeitgebers sobald Test-    │
   │   datenp. gesendet oder empfangen werden;  │
   └─────────────────────┬─────────────────────┘
                         │                              S₅
   ┌─────────────────────▼─────────────────────┐
   │ - Stoppen des Zeitgebers sobald weitere    │
   │   Testdatenpakete oder Bestätigungsdaten   │
   │   empfangen werden;                        │
   └─────────────────────┬─────────────────────┘
                         │                              S₆
   ┌─────────────────────▼─────────────────────┐
   │ - Addieren der Zeitdifferenz und erhöhen   │
   │   der der Anzahl der empfangenen           │
   │   Testdatenp. oder Bestätigungsdatenp.;    │
   └─────────────────────┬─────────────────────┘
                         │                              S₇
   ┌─────────────────────▼─────────────────────┐
   │ - Abschalten der Störungen sobald          │
   │   Steuerdaten übertragen werden oder       │
   │   übertragen der Steuerdaten auf einer     │
   │   weiteren nicht gestörten Verbindung;     │
   └─────────────────────┬─────────────────────┘
                         │                              S₈
   ┌─────────────────────▼─────────────────────┐
   │ - Übertragen des Befehls, dass alle Daten  │
   │   gesendet sind als Steuerdaten;           │
   └─────────────────────┬─────────────────────┘
                         │                              S₉
   ┌─────────────────────▼─────────────────────┐
   │   - Berechnen der Übertragungsparameter;   │
   └─────────────────────┬─────────────────────┘
                         │                              S₁₀
   ┌─────────────────────▼─────────────────────┐
   │ - Erstellen und Übertragen des Messprot.;  │
   └─────────────────────┬─────────────────────┘
                         │
                    ┌────▼─────┐
                    │   Ende   │
                    └──────────┘
```

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2352129 A
- JP 2007116329 A